# EUROPEAN PATENT SPECIFICATION

(11) **EP 1 361 256 B1**
(45) Date of publication and mention of the grant of the patent: **10.06.2009**
(21) Application number: 03076339.5
(22) Date of filing: 06.05.2003
(51) Int. Cl.: C08L 95/00

(54) **Method for preparing granulates**
Verfahren zur Herstellung von Granulat
Procédés de fabrication de granulats

(30) Priority: 06.05.2002 NL 1020543
(43) Date of publication of application: 12.11.2003
(73) Proprietor: Latexfalt B.V., 2396 ZG Koudekerk a/d Rijn (NL)
(72) Inventor: Lommerts, Bert Jan, 1703 RB Heerhugowaard (NL); Besamusca, Jeroen Theodorus Maria, 3991 KA Houten (NL)
(74) Representative: Jorritsma, Ruurd

(56) References cited:
- FR-A- 2 000 139
- FR-A- 2 303 838

## Description

The invention relates to a method for preparing granules, in particular granules which comprise a bituminous material.

During the processing of petroleum, heavy residual products are obtained and are converted into bitumen after they have been treated further. Bitumen is used, for example, to asphalt roads and to prepare roofing materials. To improve the properties of bitumen, it is often necessary to modify the bitumen, for example by addition of or modification with polymers.

In many applications for bitumen-containing products, the problem arises that bitumen has to be transported in the heated state. If bitumen is transported and/or stored in the heated state for a prolonged period, it is degraded as a result of chemical changes. Consequently, the properties of bitumen may change during storage and transportation.

Moreover, the transporting of heated materials, such as bitumen, is subject to stringent regulations relating to safety requirements, which entails high costs. Therefore, storing and transporting materials such as bitumen in the heated state is relatively expensive and environmentally unfriendly.

US 5,733,980 describes elastomeric block polymers of ethylene which include a block A and block B, block A being a homopolymer of ethylene or a copolymer of ethylene and an α-alkene. Block B comprises two polymer segments, the first polymer segment containing ethylene and an α-alkene and the second polymer segment containing ethylene, an α-alkene and a diene. According to column 15, lines 40-48, these polymers can be mixed into bitumen in the form of granules, for example.

US 5,494,966 describes, inter alia, a stable composition of a liquid phase consisting of bitumen, a particulate phase consisting of alkene polymer and a stabilizer, in which the alkene polymer may be a homopolymer or a copolymer of ethylene. According to column 3, lines 27-34, the modification is carried out in situ by conversion of various components. These components are polymers with unsaturated carbon-carbon bonds or with functional groups which contain heteroatoms, so that during the formation of the composition the liquid phase and the particulate phase are chemically bonded (cf. for example column 4, lines 48-59 and column 5, lines 22-24). In this case, the polymers are dispersed in the bitumen (cf. for example column 3, lines 1-4). The composition can be used as a modification to bitumen (cf. column 3, lines 62-66 and column 5, lines 17-24). The modified bitumen described in US 5,494,966 can in principle be transported in the cold state, but because it is a viscous material it will be clear to the person skilled in the art that this will not be easy. Moreover, the stability is still not particularly high: according to Example 3, the composition is stable for three days at 160°C.

FR A 2000139 discloses particles of moulding compositions which arc prepared from bitumen, polyethylene and polyisobutylene. The particles are prevented from adhering together by the use of a polyethylene powder having a melt index of preferably 15 - 30. Copolymers with e.g. (meth)acrylic esters and vinyl esters may also be used.

FR A 2303838 discloses fixtures of 10 to 90 % by weight of bitumen, 90 to 10 % by weight of a copolymer of olefins and unsaturated carboxylic acid esters and 0.1 to 10 % by weight of long chain aliphatic alcohols containing at least 14 carbon atoms.

The invention provides a solution to the problems described above, in particular for stabilizing bitumen and for storing and transporting bitumen in the cold state. Therefore, the invention provides a method for preparing granules as described above which are stable for a very long time and can easily be transported. The invention therefore relates to a method for preparing granules, in which an oil and a polyethylene with a molecular weight of 500,000 to 10,000,000 and a tensile strength of 20 to 60 MPa are mixed at a temperature of from 100°C to 250°C, preferably 100° to 200°C, then a bituminous material is added, and the mixture obtained in this way is subjected to mixing extrusion for no more than 10 minutes. In these granules, the bitumen is dispersed in the polyethylene.

The technological advantages of the invention are in particular as follows. The granules according to the invention can be described as a mixture of a (semi)continuous phase which consists of the polyethylene and a discontinuous phase of the bituminous material, i.e. bitumen particles are, as it were, dispersed in a polyethylene phase. Bitumen can easily be transported to the intended destination in the form of the granules. At the intended destination, the granules are used, for example, to prepare hot binder compositions, the granules being subjected to a heat treatment or being exposed to heat. The result of this is that phase inversion occurs, so that the polyethylene is dispersed in the bituminous material phase. According to the invention, therefore, the polyethylene is used as a type of processing aid.

In the context of the present application, the term polyethylene is understood as meaning homopolymers of ethylene and copolymers of ethylene, the copolymers containing 0.1 to 20% by weight, preferably 0.2 to 10% by weight, of a C₃-C₂₀ α-alkene and/or a C₄-C₂₀ diene.

The polyethylene preferably has a molecular weight of 1,000,000 to 5,000,000, and in particular from 2,500,000 to 4,000,000, the molecular weight being determined by means of viscosity measurements. The polyethylene preferably has a tensile strength of 25 to 50 MPa, and in particular of 30 to 45 MPa. Furthermore, the polyethylene preferably has a density (measured in accordance with ASTM D 792) of 0.925 to 0.950 g/cm³, more preferably from 0.930 to 0.945 g/cm³, and in particular from 0.930 to 0.940 g/cm³. Furthermore, the polyethylene preferably has a molecular weight distribution of 1.5 to 30, more preferably of 2 to 15.

The oil is preferably an aromatic or paraffinic extraction product obtained from petroleum. The aromatic extraction product (brightstock) is preferably obtained by solvent extraction, in particular furfural extraction, of a petroleum fraction containing aromatics. This petroleum fraction containing aromatics can be obtained from petroleum directly, i.e. by distillation, or can be synthesized from petroleum or fractions thereof via a processing process, such as catalytic cracking. The aromatic extraction product preferably has an initial boiling point of 400-600°C and a density (ASTM D 1298/4052, 15°C) of 0.97-0.99 g/cm³. The kinematic viscosity (ASTM D 445, 100°C) is preferably 50 to 60 mm²/s. The pour point (ASTM D 97) is preferably 30 to 40°C. The paraffinic extraction product can be obtained, for example, by solvent extraction with methyl ethyl ketone/toluene followed by further treatments if required, such as cracking, isomerization and hydrogenation.

The bituminous material is preferably bitumen itself, modified bitumen or a petroleum resin. Bitumen can be modified using polymers, as described, for example, in EP-A-317 025 and EP-A 360 656, which are hereby incorporated by reference. The petroleum resin is preferably a polymer which is obtained by polymerization of a C₉ aromatic fraction. This aromatic fraction preferably contains C₈-C₁₀ monoalkenes, such as indenes, for example methylindene, and vinylaromatics, for example styrene and vinyltoluene, and cyclic conjugated dienes, such as cylopentadiene dimer. The petroleum resin is in particular a copolymer of the abovementioned monoalkenes and vinylaromatics, in particular a copolymer of an unsubstituted or substituted indene and a vinylaromatic. If appropriate, the petroleum resin may, as a third monomer, contain an unsaturated carboxylic acid or an anhydride, amide or ester thereof. The petroleum resin preferably has a softening point of 100 to 150°C.

The mixture which comprises oil, polyethylene and bituminous material contains, calculated on the basis of oil, polyethylene and bituminous material, from 0.1 to 10% by weight, preferably 0.2 to 8% by weight of polyethylene, more preferably 0.5 to 5% by weight of polyethylene and in particular 1 to 3% by weight of polyethylene.

The mixture also contains 1 to 80% by weight of oil, preferably 2 to 60% by weight of oil, more preferably 3 to 40% by weight of oil.

It has been found that if the oil and the polyethylene are mixed, a viscous solution is formed. If the bituminous material is added to this viscous solution, granules can be prepared therefrom by means of mixing extrusion, provided that the extrusion takes place within 10 minutes, preferably within 8 minutes and in particular within 5 minutes of the bitumen being added.

As mentioned above, the granules according to the invention can be described as a mixture of a polyethylene phase and a bitumen phase, in which the polyethylene phase is a semi(continuous) phase and the bitumen phase is the discontinuous phase. When the granules according to the invention are being used, with the granules exposed to heat, phase inversion occurs, so that the polyethylene phase becomes the discontinuous phase and the bitumen phase becomes the (semi)continuous phase. The granules according to the invention are also characterized by the fact that when subjected to a heat treatment at at least 100°C, the granules undergo a reduction in G' (measured at a frequency of 3.16 Hz and a temperature of 100°C) of at least 10%, preferably at least 30% and in particular at least 50%. This reduction in G' is completely attributable to a physical process.

The granules according to the invention may also contain various additives, such as inorganic materials, hardeners, antioxidants, UV stabilizers, colours and pigments. The granules may also contain block polymers, such as styrene-butydiene-styrene or styrene-isoprene-styrene or rubbers such as EP(D)M.

The granules according to the invention can advantageously be used for the preparation of hot binder compositions. These hot binder compositions can be used, for example, for asphalting roads. Furthermore, these hot binder compositions can be used for the production of joint fillers for bridges and between concrete slabs and to fill cracks and fissures.

### Example

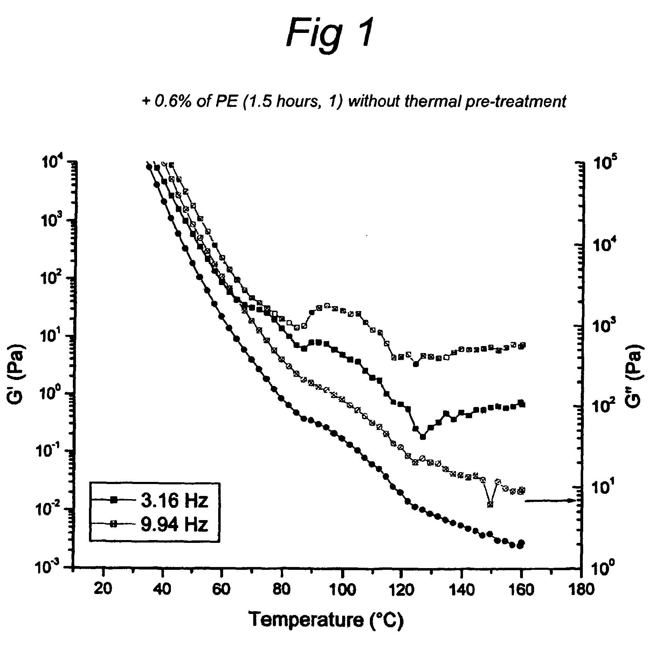

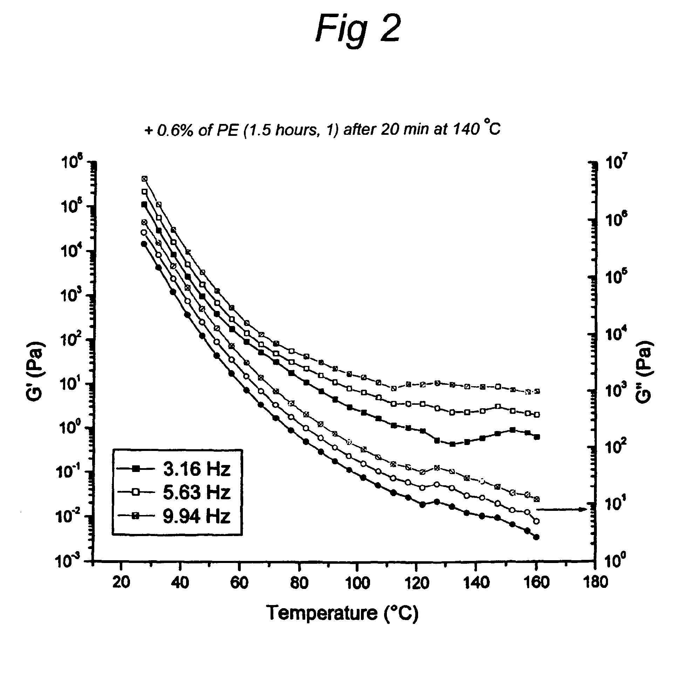

Granules were prepared from 65% by weight of oil, 0.6% by weight of a polyethylene with a molecular weight of 4.5 million, a tensile strength of 24 MPa, a density of 0.931 g/cm³ and a melting point of 135.4°C, marketed by DSM, and 29.4% by weight of a Nevchem petroleum resin (obtainable from Nevcin Polymers B. V., Uithoorn). First of all, the oil and the polyethylene were mixed at a temperature of 180°C, after which the resin was added. Samples were taken from this mixture at various times. After 5 minutes, it is no longer possible to quench a sample with water to form granules which can be handled and subjected to load. The granules were analyzed with the aid of DSC (10.48 mg of samples; heating section: (1) 5 min at -50°C, (2) from -50° to 180°C in 20 min, (3) 5 min at 180°C). The DSC chromatrogram showed that phase inversion had occurred, at a transition temperature of 110.7°C. The cooling chromatrogram ((4) from 180° to -50°C in 20 min, (5) 5 min at -50°C, (6) from -50°C to 180°C in 20 min) showed that the phase inversion had been completed. It was clear from this experiment that a stable intermediate has been formed. This intermediate disappears after heating for a second time to above the melting point of the intermediate. The differences between the rheological properties, G' and G", also indicate that demonstrable phase inversion occurs on exposure to heat (cf. Figures 1 and 2). G' and G" can be determined in accordance with ASTM D 4440-01.

G' is the storage modulus and represents the absorbed energy which is reversible. G' is a measure of the elasticity of the material. G" is the loss modulus and represents the irreversible energy released to the environment. G" is a measure of the viscous part of the material.

The temperature dependency of the storage modulus G' shows a significant change between a sample without thermal pre-treatment and a sample with thermal pre-treatment.

## Claims

1. Method for preparing granules, in which an oil and a polyethylene with a molecular weight of 500,000 to 10,000,000 and a tensile strength of 20 to 60 MPa are mixed at a temperature of from 100°C to 250°C, then a bituminous material is added, and the mixture obtained in this way is subjected to mixing extrusion for no more than 10 minutes.

2. Method according to Claim 1, in which the polyethylene has a density of 0.925 to 0.950 g/cm³.

3. Method according to Claim 1 or 2, in which the polyethylene has a molecular weight distribution of from 1.5 to 30.

4. Method according to one of the preceding claims, in which the oil is an aromatic or paraffinic extraction product obtained from petroleum.

5. Method according to one of the preceding claims, in which the bituminous material is bitumen, modified bitumen or a petroleum resin.

6. Method according to one of the preceding claims, in which the mixture, calculated on the basis of oil, polyethylene and bituminous material, contains 0.1 to 10% by weight of polyethylene.

7. Method according to one of the preceding claims, in which the mixture, calculated on the basis of oil, polyethylene and bituminous material, contains 1 to 80% by weight of oil.

8. Granules obtainable using the method according to one of Claims 1-7.

9. Granules according to Claim 8, in which the granules comprise a discontinuous phase of substantially bituminous material and a semi(continuous) phase of a polyethylene with a molecular weight of 500,000 to 10,000,000 and a tensile strength of 20 to 60 MPa.

10. Granules according to Claim 8 or 9, which when subjected to a heat treatment at at least 100°C experience a reduction in G' (measured at a frequency of 3.16 Hz and a temperature of 100°C) of at least 10%.

11. Use of the granules according to Claim 9 or Claim 10 or the granules obtainable using the method according to one of Claims 1-7 for the preparation of hot binder compositions.

12. Method for asphalting roads, in which a hot binder composition according to Claim 11 is used.

13. Method for producing joint fillers in which a hot binder composition according to Claim 11 is used.

## Patentansprüche

1. Verfahren zum Herstellen von Granulat, wobei ein Öl und ein Polyethylen mit einem Molekulargewicht von 500.000 bis 10.000.000 und einer Zugfestigkeit von 20 bis 60 MPa bei einer Temperatur von 100 °C bis 250 °C vermischt werden, danach ein bituminöses Material hinzugegeben wird und das auf diese Weise erhaltene Gemisch nicht mehr als 10 Minuten lang einer Mischextrusion unterworfen wird.

2. Verfahren nach Anspruch 1, wobei das Polyethylen eine Dichte von 0,925 bis 0,950 g/cm³ aufweist.

3. Verfahren nach Anspruch 1 oder 2, wobei das Polyethylen eine Molekulargewichtsverteilung von 1,5 bis 30 aufweist.

4. Verfahren nach einem der vorhergehenden Ansprüche, wobei es sich bei dem Öl um ein aromatisches oder paraffinisches Extraktionsprodukt handelt, welches aus Erdöl erhalten wird.

5. Verfahren nach einem der vorhergehenden Ansprüche, wobei es sich bei dem bituminösen Material um Bitumen, modifiziertes Bitumen oder ein Petrolharz handelt.

6. Verfahren nach einem der vorhergehenden Ansprüche, wobei das Gemisch 0,1 bis 10 Gewichts-% Polyethylen enthält, berechnet auf der Basis von Öl, Polyethylen und bituminösem Material.

7. Verfahren nach einem der vorhergehenden Ansprüche, wobei das Gemisch 1 bis 80 Gewichts-% Öl enthält, berechnet auf der Basis von Öl, Polyethylen und bituminösem Material.

8. Granulat, welches über die Anwendung des Verfahrens nach einem der Ansprüche 1 bis 7 erhalten werden kann.

9. Granulat nach Anspruch 8, wobei das Granulat eine diskontinuierliche Phase von im Wesentlichen bituminösem Material und eine (semi-)kontinuierliche Phase eines Polyethylens mit einem Molekulargewicht von 500.000 bis 10.000.000 und einer Zugfestigkeit von 20 bis 60 MPa umfasst.

10. Granulat nach Anspruch 8 oder 9, welches, wenn es einer Wärmebehandlung bei mindestens 100 °C unterzogen wird, eine Verringerung von G' (gemessen mit einer Frequenz von 3,16 Hz und bei einer Temperatur von 100 °C) um mindestens 10 % erfährt.

11. Verwendung des Granulats nach Anspruch 9 oder Anspruch 10 oder des Granulats, welches über die Anwendung des Verfahrens nach einem der Ansprüche 1 bis 7 erhalten werden kann, für die Herstellung von heißen Bindemittelzusammensetzungen.

12. Verfahren zum Asphaltieren von Straßen, wobei eine heiße Bindemittelzusammensetzung nach Anspruch 11 verwendet wird.

13. Verfahren zur Herstellung von Fugenfüllstoffen, wobei eine heiße Bindemittelzusammensetzung nach Anspruch 11 verwendet wird.

## Revendications

1. Procédé de préparation de granulés, dans lequel une huile et un polyéthylène ayant un poids moléculaire compris entre 500.000 et 10.000.000 et une résistance à la traction comprise entre 20 et 60 MPa sont mélangés à une température comprise entre 100°C et 250°C, ensuite un matériau bitumineux est ajouté, et le mélange obtenu de cette manière est soumis à une extrusion en mélange pendant pas plus de 10 minutes.

2. Procédé selon la revendication 1, dans lequel le polyéthylène a une densité comprise entre 0,925 et 0,950 g/cm³.

3. Procédé selon la revendication 1 ou 2, dans lequel le polyéthylène a une répartition du poids moléculaire comprise entre 1,5 et 30.

4. Procédé selon l'une des revendications précédentes, dans lequel l'huile est un produit d'extraction aromatique ou paraffinique obtenu à partir de pétrole.

5. Procédé selon l'une des revendications précédentes, dans lequel le matériau bitumineux est du bitume, du bitume modifié ou une résine de pétrole.

6. Procédé selon l'une des revendications précédentes, dans lequel le mélange, calculé sur la base d'huile, de polyéthylène et de matériau bitumineux, contient entre 0,1 et 10 % en poids de polyéthylène.

7. Procédé selon l'une des revendications précédentes, dans lequel le mélange, calculé sur la base d'huile, de polyéthylène et de matériau bitumineux, contient entre 1 et 80 % en poids d'huile.

8. Granulés pouvant être obtenus en utilisant le procédé selon l'une des revendications 1 à 7.

9. Granulés selon la revendication 8, dans lesquels les granulés comprennent une phase discontinue de matériau sensiblement bitumineux et une phase semi-(continue) d'un polyéthylène ayant un poids moléculaire compris entre 500.000 et 10.000.000 et une résistance à la traction comprise entre 20 et 60 MPa.

10. Granulés selon la revendication 8 ou 9, qui, lorsqu'ils sont soumis à un traitement thermique à au moins 100°C subissent une réduction en G' (mesurée à une fréquence de 3,16 Hz et à une température de 100°C) d'au moins 10 %.

11. Utilisation des granulés selon la revendication 9 ou la revendication 10, ou des granulés pouvant être obtenus en utilisant le procédé selon l'une des revendications 1 à 7 pour la préparation de compositions de liant chaudes.

12. Procédé d'asphaltage des routes, dans lequel une composition de liant chaude selon la revendication 11 est utilisée.

13. Procédé de fabrication de produits de remplissage pour joints dans lesquels une composition de liant chaude selon la revendication 11 est utilisée.
